# FASCICULE DE BREVET EUROPEEN

(11) **EP 4 251 668 B1**
(45) Date de publication et mention de la délivrance du brevet: **12.02.2025**
(21) Numéro de dépôt: 21823973.9
(22) Date de dépôt: 22.11.2021
(51) Int. Cl.: C08F 297/08, C08F 210/02

(54) **SYNTHÈSE DE POLYMÈRES À BLOCS À BASE DE 1,3-DIÈNE ET D'ÉTHYLÈNE**
SYNTHESE VON BLOCKCOPOLYMEREN AUF BASIS VON 1,3-DIEN UND ETHYLEN
SYNTHESIS OF BLOCK POLYMERS BASED ON 1,3-DIENE AND ETHYLENE

(30) Priorité: 26.11.2020 FR 2012207
(43) Date de publication de la demande: 04.10.2023
(73) Titulaire: COMPAGNIE GENERALE DES ETABLISSEMENTS MICHELIN, 63000 Clermont-Ferrand (FR); Centre National de la Recherche Scientifique, 75794 Paris Cedex 16 (FR); Ecole Superieure de Chimie, Physique, Electronique de Lyon, 69616 Villeurbanne (FR); Université Claude Bernard Lyon 1, 69622 Villeurbanne Cedex (FR)
(72) Inventeur: NGO, Robert, 63040 CLERMONT-FERRAND Cedex 9 (FR); BAULU, Nicolas, 63040 CLERMONT-FERRAND Cedex 9 (FR); BOISSON, Christophe, 01390 TRAMOYES (FR); D'AGOSTO, Franck, 69740 GENAS (FR); JEAN-BAPTISTE-DIT-DOMINIQUE, François, 63040 CLERMONT-FERRAND Cedex 9 (FR); THUILLIEZ, Julien, 63040 CLERMONT-FERRAND Cedex 9 (FR)
(74) Mandataire: M.F.P. Michelin
(86) Numéro de dépôt international: PCT/FR2021/052059
(87) Numéro de publication internationale: WO 2022/112700

(56) Documents cités:
- EP-A1- 2 599 809
- WO-A1-2019/077232
- JP-A- H09 255 742

## Description

Le domaine de la présente invention est celui des procédés de synthèse des polymères à blocs, dits multiblocs, à base de 1,3-diène et d'éthylène qui contiennent au moins trois blocs. Plus particulièrement, le domaine de l'invention est celui des polymères blocs qui comportent au moins un premier bloc copolymère à base d'éthylène et d'un 1,3-diène et deux autres blocs polyéthylène, chaque bloc polyéthylène étant rattaché à une extrémité distincte du premier bloc qui se trouve être un bloc central au sein du polymère bloc.

Le document EP 2599809 A1 décrit la synthèse de polymères multiblocs à base d'éthylène et de 1,3-butadiène. Ils sont synthétisés par une première étape de polymérisation d'éthylène, suivie d'une étape de polymérisation de 1,3-butadiène. Des polymères multiblocs sont synthétisés également en réitérant plusieurs fois la séquence composée de la polymérisation d'une première charge monomère d'éthylène et de la polymérisation d'une deuxième charge monomère de 1,3-butadiène. Les polymères blocs sont décrits comme étant constitués de blocs polybutadiène à fort taux de cis et de blocs polyéthylène caractérisés respectivement par une température de transition vitreuse d'un polybutadiène fort taux de cis et par une température de fusion du polyéthylène. Ils sont synthétisés en présence d'un système catalytique qui comporte trois composants, à savoir un métallocène de terre rare, un borate et un hydrure d'akylaluminium. En raison du procédé utilisé, la formation de chaque bloc supplémentaire après la synthèse d'un premier bloc requiert l'ajout d'une nouvelle charge monomère dans le milieu de polymérisation. Ainsi, la synthèse d'un polymère tribloc requiert d'utiliser trois charges monomères, la synthèse d'un pentabloc cinq charges monomères, etc. Or, l'homme du métier sait que l'ajout d'une charge monomère dans un milieu de polymérisation au cours de la réaction de polymérisation s'accompagne généralement d'une désactivation d'une partie des sites actifs qui participent à la réaction de polymérisation, ce qui a pour effet de former des espèces polymères autres que le polymère bloc visé. Le rendement en polymère bloc visé s'en trouve diminué.

Les Demanderesses ont découvert un procédé bien plus efficace de synthèse de polymères multiblocs à base d'éthylène et de 1,3-diène, puisqu'il permet de réduire le nombre de charges monomères et ainsi augmenter le rendement en le polymère multibloc souhaité.

Ainsi, un premier objet de l'invention est un procédé de préparation d'un polymère multibloc qui comprend la copolymérisation statistique d'un mélange monomère contenant de l'éthylène et un 1,3-diène, puis la polymérisation subséquente d'éthylène en présence d'un système catalytique à base au moins d'un métallocène de formule (la) ou (Ib) et d'un organomagnésien de formule (IIa) ou (IIb)

{P(Cp¹)(Cp²)Y} (la)

Cp³Cp⁴Y (Ib)

Y désignant un groupe comportant un atome d'une terre rare,
Cp¹ et Cp², identiques ou différents, étant choisis dans le groupe constitué par les groupes fluorényles, les groupes cyclopentadiényles et les groupes indényles, les groupes étant substitués ou non substitués,
P étant un groupe pontant les deux groupes Cp¹ et Cp², et comprenant un atome de silicium ou de carbone,
Cp³ et Cp⁴, identiques ou différents, sont choisis dans le groupe constitué par les groupes fluorényles, les groupes cyclopentadiényles et les groupes indényles, les groupes étant substitués ou non substitués,

   R^{B}-(Mg-R^{A})ₘ-Mg-R^{B} (IIa)

   X-Mg-R^{A}-Mg-X (Ilb)

   R^{A} étant une chaîne divalente hydrocarbonée aliphatique, interrompue ou non par un ou plusieurs atomes d'oxygène ou de soufre ou bien par un ou plusieurs groupes arylènes,
   R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
   X étant un atome d'halogène,
   m étant un nombre supérieur ou égal à 1, de préférence égal à 1.

Un deuxième objet de l'invention est un polymère multibloc, notamment tribloc, susceptible d'être obtenu par le procédé conforme à l'invention. Il a pour caractéristique essentielle de comprendre au sein de la chaîne polymère un groupe divalent qui résulte du procédé utilisé pour sa fabrication. Il a l'avantage d'être moins pollué par des espèces polymères résultant de la désactivation partielle des sites actifs de la polymérisation.

### Description

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression « à base de » utilisée pour définir les constituants d'un système catalytique ou d'une composition, on entend le mélange de ces constituants, ou le produit de la réaction d'une partie ou de la totalité de ces constituants entre eux.

Sauf indication contraire, les taux des unités résultant de l'insertion d'un monomère dans un polymère sont exprimés en pourcentage molaire par rapport à la totalité des unités monomères qui constituent le polymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

De manière connue, on entend par unité éthylène une unité qui a pour motif-(CH₂-CH₂)-. De manière également connue, un 1,3-diène peut s'insérer dans une chaîne polymère en croissance par une insertion 1,4 ou 2,1 ou encore 3,4 dans le cas de diène substitué comme l'isoprène pour donner lieu respectivement à la formation d'unités du 1,3-diène de configuration 1,4, d'unité du 1,3-diène de configuration 1,2 ou de configuration 3,4.

Le procédé conforme à l'invention comprend la copolymérisation statistique d'un mélange monomère contenant de l'éthylène et un 1,3-diène, puis la polymérisation subséquente d'éthylène.

Dans la présente demande, on entend par métallocène un complexe organométallique dont le métal, en l'espèce l'atome de terre rare, est lié à deux groupes Cp³ et Cp⁴ ou à une molécule de ligand constitué de deux groupes Cp¹ et Cp² reliés entre eux par un pont P. Ces groupes Cp¹, Cp², Cp³ et Cp⁴, identiques ou différents, sont choisis dans le groupe constitué par les groupes fluorényles, les groupes cyclopentadiényles et les groupes indényles, ces groupes pouvant être substitués ou non substitués. On rappelle que les terres rares sont des métaux et désignent les éléments scandium, yttrium et les lanthanides dont le numéro atomique varie de 57 à 71.

Selon une première variante de l'invention, le métallocène utilisé comme constituant de base dans le système catalytique répond à la formule (la)

{P(Cp¹)(Cp²)Y} (Ia)

dans laquelle
Y désigne un groupe comportant un atome d'une terre rare,
Cp¹ et Cp², identiques ou différents, sont choisis dans le groupe constitué par les groupes fluorényles, les groupes cyclopentadiényles et les groupes indényles, les groupes étant substitués ou non substitués,
P est un groupe pontant les deux groupes Cp¹ et Cp², et comprenant un atome de silicium ou de carbone.

Selon une deuxième variante de l'invention, le métallocène utilisé comme constituant de base dans le système catalytique conforme à l'invention répond à la formule (Ib)

Cp³Cp⁴Y (Ib)

dans laquelle
Y désigne un groupe comportant un atome d'une terre rare,
Cp³ et Cp⁴, identiques ou différents, sont choisis dans le groupe constitué par les groupes fluorényles, les groupes cyclopentadiényles et les groupes indényles, les groupes étant substitués ou non substitués.

A titre de groupes cyclopentadiényles, fluorényles et indényles substitués, on peut citer ceux substitués par des radicaux alkyles ayant 1 à 6 atomes de carbone ou par des radicaux aryles ayant 6 à 12 atomes de carbone ou encore par des radicaux trialkylsilyles tels que SiMe₃. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

A titre de groupes fluorényles substitués, on peut citer ceux substitués en position 2,7, 3 ou 6, particulièrement le 2,7-ditertiobutyle-fluorényle, le 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

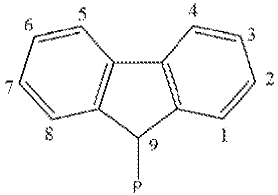

A titre de groupes cyclopentadiényles substitués, on peut citer ceux substitués aussi bien en position 2 (ou 5) qu'en position 3 (ou 4), particulièrement ceux substitués en position 2, plus particulièrement le groupe tétraméthylcyclopentadiènyle. La position 2 (ou 5) désigne la position de l'atome de carbone qui est adjacent à l'atome de carbone auquel est attaché le pont P, comme cela est représenté dans le schéma ci-après.

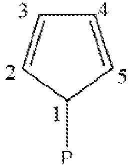

A titre de groupes indényles substitués, on peut citer particulièrement ceux substitués en position 2, plus particulièrement le 2-méthylindényle, le 2-phénylindényle. La position 2 désigne la position de l'atome de carbone qui est adjacent à l'atome de carbone auquel est attaché le pont P, comme cela est représenté dans le schéma ci-après.

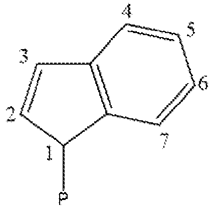

De préférence, le métallocène est de formule (la).

De préférence, Cp¹ et Cp² sont identiques et sont choisis dans le groupe constitué par les groupes fluorényles substitués et le groupe fluorényle non substitué de formule C₁₃H₈. Le système catalytique selon ce mode de réalisation préférentiel a la particularité de conduire à des copolymères à base de butadiène et d'éthylène qui comprennent en plus des unités monomères éthylène et des unités butadiène des unités cycliques de motif 1,2-cyclohexanediyle de formule suivante :

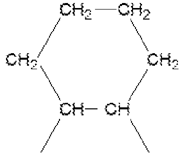

Avantageusement, Cp¹ et Cp² sont identiques et représentent chacun un groupe fluorényle non substitué de formule C₁₃H₈, représenté par le symbole Flu.

De préférence, le symbole Y représente le groupe Met-G, avec Met désignant l'atome de la terre rare et G désignant un groupe comprenant le motif borohydrure BH₄ ou désignant un atome d'halogène choisi dans le groupe constitué par le chlore, le fluor, le brome et l'iode. Avantageusement, G désigne un atome de chlore ou le groupe de formule (III) :

(BH₄)_{(1+y)-}L_{y}-Nₓ (III)

dans laquelle
L représente un métal alcalin choisi dans le groupe constitué par le lithium, le sodium et le potassium,
N représente une molécule d'un éther,
x, nombre entier ou non, est égal ou supérieur à 0,
y, nombre entier, est égal ou supérieur à 0.
Très avantageusement, G désigne le groupe de formule (III).

Comme éther convient tout éther qui a le pouvoir de complexer le métal alcalin, notamment le diéthyléther et le tétrahydrofurane.

Le métal du métallocène, la terre rare, est de préférence un lanthanide dont le numéro atomique va de 57 à 71, de manière plus préférentielle le néodyme, Nd.

Le pont P reliant les groupes Cp¹ et Cp² répond de préférence à la formule ZR¹R², dans laquelle Z représente un atome de silicium ou de carbone, R¹ et R², identiques ou différents, représentent chacun un groupe alkyle comprenant de 1 à 20 atomes de carbone, de préférence un méthyle. Dans la formule ZR¹R², Z représente avantageusement un atome de silicium, Si.

Le métallocène utile à la synthèse du système catalytique peut se trouver sous la forme de poudre cristallisée ou non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofurane ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Selon un mode de réalisation particulièrement préférentiel, le métallocène est de formule (III-1), (III-2), (!!!-3), (!!!-4) ou (!!!-5) :

[Me₂Si(Flu)₂Nd(µ-BH₄)₂Li(THF)] (III-1)

[{Me₂SiFlu₂Nd(µ-BH₄)₂Li(THF)}₂] (III-2)

[Me₂SiFlu₂Nd(µ-BH₄)(THF)] (III-3)

[{Me₂SiFlu₂Nd(µ-BH₄)(THF)}₂] (III-4)

[Me₂SiFlu₂Nd(µ-BH₄)] (III-5)

dans laquelle Flu représente le groupe C₁₃H₈.

Un autre constituant de base du système catalytique est le co-catalyseur, un organomagnésien de formule (IIa) ou de formule (IIb).

R^{B}-(Mg-R^{A})ₘ-Mg-R^{B} (IIa)

X-Mg-R^{A}-Mg-X (IIb)

R^{A} étant une chaîne divalente hydrocarbonée aliphatique, interrompue ou non par un ou plusieurs atomes d'oxygène ou de soufre ou bien par un ou plusieurs groupes arylènes,
R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
X étant un atome d'halogène,
m étant un nombre supérieur ou égal à 1, de préférence égal à 1.

Les co-catalyseurs de formule (IIa) et (Ilb) ont tous les deux la particularité de comporter deux liaisons magnésium-carbone impliquant des atomes de magnésium distincts. Dans la formule (IIa), deux atomes de magnésium partagent chacun une première liaison avec un premier atome de carbone appartenant à R^{B} et une deuxième liaison avec un deuxième atome de carbone appartenant à R^{A}. Le premier atome de carbone est constitutif du noyau benzénique de R^{B}. Le deuxième atome de carbone est constitutif de la chaîne hydrocarbonée aliphatique R^{A} qui peut contenir au sein de sa chaîne un ou plusieurs hétéroatomes choisis parmi l'oxygène et le soufre ou bien un ou plusieurs groupes arylènes. Dans le cas préférentiel où m est égal à 1, chaque atome de magnésium partage donc une première liaison avec un premier atome de carbone de R^{B} et une deuxième liaison avec un deuxième atome de carbone de R^{A}. Dans la formule (Ilb), chaque atome de magnésium partage donc une première liaison avec un atome d'halogène et une deuxième liaison avec un atome de carbone de R^{A}.

Dans la formule (IIa), R^{B} a pour caractéristique de comprendre un noyau benzénique substitué par l'atome de magnésium. Les deux atomes de carbone du noyau benzénique de R^{B} en ortho du magnésium portent un substituant, identique ou différent. Alternativement l'un des deux atomes de carbone du noyau benzénique de R^{B} en ortho du magnésium peut porter un substituant, l'autre atome de carbone du noyau benzénique de R^{B} en ortho du magnésium peut former un cycle. Le substituant est un méthyle, un éthyle ou un isopropyle. Dans le cas où l'un des 2 atomes de carbone du noyau benzénique de R^{B} en ortho du magnésium est substitué par un isopropyle, de préférence le deuxième atome de carbone du noyau benzénique de R^{B} en ortho du magnésium n'est pas substitué par un isopropyle. De préférence, les atomes de carbone du noyau benzénique de R^{B} en ortho du magnésium sont substitués par un méthyle ou un éthyle. De manière plus préférentielle, les atomes de carbone du noyau benzénique de R^{B} en ortho du magnésium sont substitués par un méthyle.

Le composé organomagnésien de formule (IIa) répond préférentiellement à la formule (IIa-m) dans laquelle R₁ et R₅, identiques ou différents, représentent un méthyle ou un éthyle, de préférence un méthyle, R₂, R₃ et R₄, identiques ou différents, représentent un atome d'hydrogène ou un alkyle et R^{A} est une chaîne divalente hydrocarbonée aliphatique, interrompue ou non par un ou plusieurs atomes d'oxygène ou de soufre ou bien par un ou plusieurs groupes arylènes, m est supérieur ou égal à 1. De préférence, R₁ et R₅ représentent un méthyle. De préférence, R₂ et R₄ représentent un atome hydrogène.

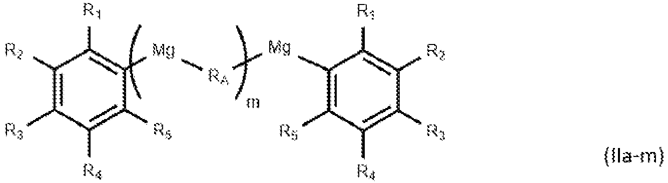

Le composé organomagnésien de formule (IIa-m) est de formule (Ila-1) dans le cas où m est égal à 1.

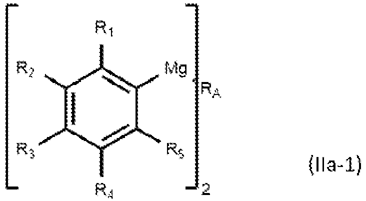

Selon une variante préférentielle, R₁, R₃ et R₅ sont identiques dans la formule (Ila-m), notamment dans la formule (Ila-1). Selon une variante plus préférentielle, R₂ et R₄ représentent un hydrogène et R₁, R₃ et R₅ sont identiques. Dans une variante davantage préférentielle, R₂ et R₄ représentent un hydrogène et R₁, R₃ et R₅ représentent un méthyle.

Dans les formules (IIa) et (Ila-m), en particulier dans la formule (Ila-1), et dans la formule (IIb), R^{A} est une chaîne hydrocarbonée aliphatique divalente qui peut contenir au sein de sa chaîne un ou plusieurs hétéroatomes choisis parmi l'oxygène et le soufre ou bien un ou plusieurs groupes arylènes. De préférence, R^{A} est un alcanediyle, ramifiée ou linéaire, un cycloalcanediyle ou un radical xylènediyle. De manière plus préférentielle, R^{A} est un alcanediyle.

De préférence, R^{A} contient 3 à 10 atomes de carbone, en particulier 3 à 8 atomes de carbone.

De manière encore plus préférentielle, R^{A} est un alcanediyle ayant 3 à 10 atomes de carbone. Avantageusement, R^{A} est un alcanediyle ayant 3 à 8 atomes de carbone. Très avantageusement, R^{A} est un alcanediyle linéaire. Comme groupe R^{A} conviennent tout particulièrement le 1,3-propanediyle, le 1,4-butanediyle, le 1,5-pentanediyle, le 1,6-hexanediyle, le 1,7-heptanediyle, le 1,8-octanediyle.

Selon l'un quelconque des modes de réalisation de l'invention, m est préférentiellement égal à 1 dans la formule (IIa), en particulier dans la formule (Ila-m).

Le composé organomagnésien de formule (IIa) peut être préparé par un procédé, qui comprend la réaction d'un premier organomagnésien de formule X'Mg-R^{A}-MgX' avec un deuxième organomagnésien de formule R^{B}-Mg-X', X' représentant un atome d'halogène, préférentiellement de brome ou de chlore, R^{B} et R^{A} étant tels que définis précédemment. X' est plus préférentiellement un atome de brome. La stoechiométrie utilisée dans la réaction détermine la valeur de m dans la formule (IIa) et dans la formule (Ila-m). Par exemple un ratio molaire de 0,5 entre la quantité du premier organomagnésien et la quantité du deuxième organomagnésien est favorable à la formation d'un composé organomagnésien de formule (IIa) dans laquelle m est égal à 1, alors qu'un ratio molaire supérieur à 0,5 sera davantage favorable à la formation d'un composé organomagnésien de formule (IV) dans laquelle m est supérieur à 1.

Pour mettre en oeuvre la réaction du premier organomagnésien avec le deuxième organomagnésien, on ajoute typiquement une solution du deuxième organomagnésien sur une solution du premier organomagnésien. Les solutions du premier organomagnésien et du deuxième organomagnésien sont généralement des solutions dans un éther, tel que le diéthyléther, le dibutyléther, le tétrahydrofurane, le méthyltétrahydrofurane ou le mélange de deux ou plus de ces éthers. De préférence, les concentrations respectives des solutions du premier organomagnésien et du deuxième organomagnésien sont respectivement 0,01 à 3 mol/L et de 0,02 à 5 mol/L. De manière plus préférentielle, les concentrations respectives du premier organomagnésien et du deuxième organomagnésien sont respectivement 0,1 à 2 mol/L et de 0,2 à 4 mol/L.

Le premier organomagnésien et le deuxième organomagnésien peuvent être préparés au préalable par une réaction de Grignard à partir de magnésium métal et d'un précurseur adéquat. Pour le premier organomagnésien et le deuxième organomagnésien, les précurseurs respectifs sont de formule X'-R^{A}-X' et R^{B}-X', R^{A}, R^{B} et X' étant tels que définis précédemment. La réaction de Grignard est mise en oeuvre typiquement par l'ajout du précurseur à du magnésium métal qui se présente généralement sous la forme de copeaux. De préférence, de l'iode (I₂) typiquement sous la forme de bille est introduit dans le réacteur avant l'ajout du précurseur afin d'activer la réaction de Grignard de manière connue.

Alternativement, le composé organomagnésien de formule (IIa) peut être préparé par réaction d'un composé organométallique de formule M-R^{A}-M et de l'organomagnésien de formule R^{B}-Mg-X', M représentant un atome de lithium, de sodium ou de potassium, X', R^{B} et R^{A} étant tels que définis précédemment. De préférence, M représente un atome de lithium, auquel cas l'organométallique de formule M-R^{A}-M est un organolithien.

La réaction de l'organolithien et de l'organomagnésien est conduite typiquement dans un éther tel que le diéthyléther, le dibutyléther, le tétrahydrofurane, le méthyltétrahydrofurane. La réaction est conduite aussi typiquement à une température allant de 0°C à 60°C. La mise en contact est réalisée de préférence à une température comprise entre 0°C et 23°C. La mise en contact du composé organométallique de formule M-R^{A}-M avec l'organomagnésien de formule R^{B}-Mg-X' se fait préférentiellement par l'ajout d'une solution du composé organométallique M-R^{A}-M à une solution de l'organomagnésien R^{B}-Mg-X'. La solution du composé organométallique M-R^{A}-M est généralement une solution dans un solvant hydrocarboné, de préférence n-hexane, cyclohexane ou méthylcyclohexane, la solution de l'organomagnésien R^{B}-Mg-X' est généralement une solution dans un éther, de préférence le diéthyléther ou le dibutyléther. De préférence, les concentrations respectives des solutions du composé organométallique et de l'organomagnésien M-R^{A}-M et R^{B}-Mg-X' sont respectivement de 0,01 à 1 mol/Let de 1 à 5 mol/L. De manière plus préférentielle, les concentrations respectives des solutions du composé organométallique et de l'organomagnésien M-R^{A}-M et R^{B}-Mg-X' sont respectivement de 0,05 à 0,2 mol/L et de 2 à 3 mol/L.

Comme toute synthèse faite en présence de composés organométalliques, les synthèses décrites pour la synthèse des organomagnésiens ont lieu dans des conditions anhydres sous atmosphère inerte, dans des réacteurs agités. Typiquement, les solvants et les solutions sont utilisés sous azote ou argon anhydre.

Une fois que l'organomagnésien de formule (IIa) est formé, il est récupéré généralement en solution après filtration conduite sous atmosphère inerte et anhydre. Il peut être stocké avant son utilisation dans sa solution dans des récipients hermétiques, par exemple des bouteilles capsulées, à une température comprise entre -25°C et 23°C.

Comme tout composé organomagnésien, le composé organomagnésien de formule (IIa) peut se présenter sous la forme d'une entité monomère (R^{B}-(Mg-R^{A})ₘ-Mg-R^{B})₁ ou sous la forme d'une entité polymère (R^{B}-(Mg-R^{A})ₘ-Mg-R^{B})ₚ, p étant un nombre entier supérieur à 1, notamment dimère (R^{B}-(Mg-R^{A})ₘ-Mg-R^{B})₂, m étant comme défini précédemment. Par ailleurs, qu'il soit sous la forme d'une entité monomère ou polymère, il peut également se présenter sous la forme d'une entité coordinée à une ou plusieurs molécules d'un solvant, de préférence d'un éther tel que le diéthyléther, le tétrahydrofurane ou le méthyltétrahydrofurane.

Les composés de formule (IIb) sont des composés bien connus comme réactifs de Grignard. En revanche, ils ne sont pas connus pour être utilisés comme co-catalyseur dans un système catalytique utilisable dans la préparation de polyoléfines. Des réactifs de Grignard de formule (IIb) sont décrits par exemple dans l'ouvrage « Advanced Organic Chemistry » de J. March, 4th Edition, 1992, page 622-623 ou dans l'ouvrage « Handbook of Grignard Reagents », Edition Gary S. Silverman, Philip E. Rakita, 1996, page 502-503. Ils peuvent être synthétisés par la mise en contact de magnésium métal avec un composé dihalogéné de formule X-R^{C}-X, R^{C} étant tel que défini selon l'invention. Pour leur synthèse, on peut par exemple se référer à la collection de volumes de « Organic Synthesis ».

Comme tout composé organomagnésien, l'organomagnésien de formule (Ilb) peut se présenter sous la forme d'une entité monomère (X-Mg-R^{A}-Mg-X)₁ ou sous la forme d'une entité polymère (X-Mg-R^{A}-Mg-X)ₚ, p étant un nombre entier supérieur à 1, notamment dimère (X-Mg-R^{A}-Mg-X)₂. Par ailleurs, qu'il soit sous la forme d'une entité monomère ou polymère, il peut également se présenter sous la forme d'une entité coordinée à une ou plusieurs molécules d'un solvant, de préférence d'un éther tel que le diéthyléther, le tétrahydrofurane ou le méthyltétrahydrofurane. Dans la formule (Ilb), X est préférentiellement un atome de brome ou de chlore, plus préférentiellement un atome de brome.

Le système catalytique peut être préparé de façon traditionnelle par un procédé analogue à celui décrit dans la demande de brevet WO 2007054224 ou WO 2007054223. Par exemple on fait réagir dans un solvant hydrocarboné le co-catalyseur, en l'espèce l'organomagnésien de formule (IIa) ou de formule (Ilb), et le métallocène typiquement à une température allant de 20 à 80°C pendant une durée comprise entre 5 et 60 minutes. Les quantités de co-catalyseur et de métallocène mises en réaction sont telles que le rapport entre le nombre de mole de Mg du co-catalyseur et le nombre de mole de métal de terre rare du métallocène va de préférence de 1 à 200, de manière plus préférentielle de 1 à moins de 20. La plage de valeurs allant de 1 à moins de 20 est notamment plus favorable pour l'obtention de polymères de masses molaires élevées. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du polymère conforme à l'invention.

Alternativement, le système catalytique peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un diène conjugué, l'éthylène ou un mélange d'éthylène et d'un diène conjugué, auquel cas le système catalytique est à base au moins du métallocène, du co-catalyseur et du monomère de préformation. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un diène conjugué, l'éthylène ou un mélange d'éthylène et d'un diène conjugué. Le diène conjugué à titre de monomère de préformation est de préférence un 1,3-diène tel que le 1,3-butadiène, l'isoprène ou encore un 1,3-diène de formule CH₂=CR-CH=CH₂, le symbole R représentant une chaîne hydrocarbonée ayant 3 à 20 atomes de carbone, en particulier le myrcène ou le β-farnésène. Le système catalytique ainsi obtenu peut être utilisé de suite dans le procédé de synthèse du polymère conforme à l'invention ou être stocké sous atmosphère inerte, notamment à une température allant de -20°C à la température ambiante (23°C), avant son utilisation dans la synthèse de polymères.

Comme toute synthèse faite en présence de composé organométallique, la synthèse du métallocène, la synthèse de l'organomagnésien et la synthèse du système catalytique ont lieu dans des conditions anhydres sous atmosphère inerte. Typiquement, les réactions sont conduites à partir de solvants et de composés anhydres sous azote ou argon anhydre.

Le système catalytique peut se présenter sous la forme d'une solution lorsqu'il est en présence d'un solvant hydrocarboné. Le solvant hydrocarboné peut être aliphatique comme le méthylcyclohexane ou aromatique comme le toluène. Le solvant hydrocarboné est de préférence aliphatique, de manière plus préférentielle le méthylcyclohexane. Généralement, le système catalytique est stocké sous la forme d'une solution dans le solvant hydrocarboné avant d'être utilisé en polymérisation. On peut parler alors de solution catalytique qui comprend le système catalytique et le solvant hydrocarboné. Le système catalytique comprend de préférence un solvant hydrocarboné. Lorsque le système catalytique est en solution, sa concentration est définie par la teneur en métal de métallocène dans la solution. La concentration en métal de métallocène a une valeur allant préférentiellement de 0,0001 à 0,2 mol/L, plus préférentiellement de 0,001 à 0,03 mol/L.

Le système catalytique est généralement introduit dans le réacteur contenant le solvant de polymérisation et les monomères. Pour atteindre la macrostructure souhaitée du polymère multibloc, l'homme du métier adapte les conditions de polymérisation, notamment le rapport molaire de l'organomagnésien sur le métal Nd constituant le métallocène. Le rapport molaire peut atteindre la valeur de 200, sachant qu'un rapport molaire inférieur à 20 est plus favorable pour l'obtention de polymères de masses molaires élevées.

L'homme du métier adapte aussi les conditions de polymérisation et les concentrations en chacun des réactifs (constituants du système catalytique, monomères) selon le matériel (outils, réacteurs) utilisé pour conduire la polymérisation. De préférence, le mélange monomère contenant de l'éthylène et un 1,3-diène contient plus de 50% en mole d'éthylène. Comme cela est connu de l'homme du métier, la polymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu, dans un réacteur avantageusement agité. Le solvant de polymérisation peut être un solvant hydrocarboné, aromatique ou aliphatique. A titre d'exemple de solvant de polymérisation, on peut citer le toluène et le méthylcyclohexane. Avantageusement, la polymérisation est conduite en solution dans un solvant hydrocarboné.

La préparation du polymère multibloc, également appelé polymère bloc, passe par la formation d'un premier bloc, dit bloc central de formule A-R^{A}-A qui est suivie de la formation des autres blocs, dit blocs successifs. Les unités monomères constitutives des blocs successifs s'incorporent dans la chaîne polymère en croissance à partir de chacune des extrémités de chaîne du bloc central. La formation du bloc central requiert une première charge monomère, en l'espèce un mélange monomères contenant de l'éthylène et un 1,3-diène. La formation des blocs successifs se fait par une réaction de polymérisation qui se propage à partir des extrémités distinctes du bloc précédent. La formation de deux blocs de même microstructure à partir des extrémités distinctes du bloc précédent requiert donc une seule charge monomère. Ainsi, dans la synthèse d'un polymère tribloc, deux charges monomères sont utilisées : une première charge monomère d'un mélange contenant de l'éthylène et un 1,3-diène pour la synthèse du bloc central, une deuxième charge monomère d'éthylène pour la synthèse des blocs terminaux, en l'espèce polyéthylène.

Par la polymérisation de charges monomères successives qui sont respectivement un mélange contenant de l'éthylène et un 1,3-diène et de l'éthylène, le procédé conforme à l'invention conduit à la préparation de polymères multiblocs de formule B-(A¹-B¹)ₙ-A-R^{A}-A-(B¹-A¹)ₙ-B dans laquelle A et A¹ représentent chacun un bloc qui est un copolymère statistique comprenant des unités du 1,3-diène et des unités éthylène, B et B¹ représentent chacun un bloc qui est un polyéthylène, n est un entier égal ou supérieur à 0, R^{A} est une chaîne divalente hydrocarbonée aliphatique, interrompue ou non par un ou plusieurs atomes d'oxygène ou de soufre ou bien par un ou plusieurs groupes arylènes. La présence dans la chaîne polymère du radical divalent provient du co-catalyseur utilisé dans la préparation du polymère multibloc.

Selon l'invention, le bloc central est un copolymère dit statistique, ce qui traduit que les unités monomères constitutives du bloc central sont réparties de façon statistique dans le bloc central, en raison d'une incorporation statistique des monomères dans la chaîne polymère en croissance.

Dans la préparation du bloc central, la température de polymérisation varie généralement dans un domaine allant de 30 à 160°C, préférentiellement de 30 à 120°C. Pendant la préparation du bloc central, la température du milieu réactionnel est avantageusement maintenue constante au cours de la copolymérisation et la pression totale du réacteur est aussi avantageusement maintenue constante. La préparation du bloc central s'achève en coupant l'alimentation en monomères, notamment par une chute de la pression du réacteur, de préférence jusqu'à environ 3 bars.

La polymérisation subséquente de l'éthylène se poursuit par application d'une pression d'éthylène dans le réacteur, la pression en éthylène étant maintenue constante jusqu'à la consommation désirée d'éthylène pour atteindre la masse molaire moyenne en nombre souhaitée des blocs polyéthylène. La température de polymérisation de l'éthylène est conduite de préférence à une température identique à celle de la préparation du bloc central. La température de polymérisation pour la préparation des blocs polyéthylène varie généralement dans un domaine allant de 30 à 160°C, préférentiellement de 30 à 120°C. La pression pour la préparation des blocs polyéthylène varie généralement dans un domaine allant de 1 bar à 150 bars et préférentiellement de 1 bar à 10 bars. La synthèse des blocs polyéthylène s'achève quand les blocs polyéthylène atteignent la masse molaire moyenne en nombre souhaitée.

Dans le cas de la préparation d'un polymère tribloc, la polymérisation est stoppée. Dans le cas de la préparation d'un polymère multibloc qui comprend plus de trois blocs, tel qu'un pentabloc, la polymérisation est poursuivie par les polymérisations subséquentes de charges monomères. Pour les blocs successifs contenant à la fois des unités éthylène et des unités d'un 1,3-diène, les charges monomères sont constituées d'un mélange contenant de l'éthylène et un 1,3-diène et la polymérisation est conduite dans des conditions de température et de pression analogues à celle de la préparation du bloc central. Pour les blocs successifs de polyéthylène, les charges monomères sont constituées d'éthylène et sont polymérisées dans des conditions de pression et de température déjà décrite pour la synthèse des blocs polyéthylène. En fin de synthèse du polymère multibloc, la polymérisation est stoppée.

La polymérisation peut être stoppée par refroidissement du milieu de polymérisation ou par ajout d'un alcool, préférentiellement un alcool contenant 1 à 3 atomes de carbone, par exemple l'éthanol. Le polymère multibloc, notamment tribloc, peut être récupéré selon les techniques classiques connues de l'homme du métier comme par exemple par précipitation, par évaporation du solvant sous pression réduite ou par stripping à la vapeur d'eau.

Dans le procédé conforme à l'invention, le 1,3-diène du mélange contenant de l'éthylène et un 1,3-diène peut être un 1,3-diène contenant 4 à 20 atomes de carbone. Le 1,3-diène est préférentiellement le 1,3-butadiène, l'isoprène ou un mélange de 1,3-diènes dont un est le 1,3-butadiène. Le 1,3-diène est plus préférentiellement le 1,3-butadiène selon l'un quelconque des modes de réalisation de l'invention.

Selon un mode de réalisation particulièrement préférentiel de l'invention, le mélange monomère contenant de l'éthylène et un 1,3-diène est un mélange d'éthylène et d'un 1,3-diène, ce qui revient à dire que l'éthylène et le 1,3-diène sont les seuls monomères du mélange monomère. Avantageusement, le mélange monomère contenant de l'éthylène et un 1,3-diène est un mélange d'éthylène et d'un 1,3-diène et contient plus de 50% en mole d'éthylène.

Selon un autre mode de réalisation particulièrement préférentiel de l'invention, le procédé conduit à la synthèse d'un polymère tribloc de formule B-A-B dans laquelle A, dit bloc central, est un copolymère statistique comprenant des unités du 1,3-diène et des unités éthylène, et B dit bloc terminal est un polyéthylène. Avantageusement, le bloc central A est un copolymère statistique comprenant des unités du 1,3-diène et plus de 50% en mole d'unités éthylène. Très avantageusement, le bloc central A est un copolymère statistique d'éthylène et du 1,3-diène qui contient plus de 50% en mole d'unités éthylène. Dans la présente demande, le taux des unités éthylène dans le bloc central, à savoir le nombre de moles d'unités éthylène dans le bloc central, est exprimé en pourcentage molaire par rapport au nombre de moles d'unités monomères constituant le bloc central.

De préférence, le procédé conduit à la synthèse d'un polymère bloc qui est un élastomère.

Le polymère conforme à l'invention, autre objet de l'invention, peut être préparé par un mode de réalisation particulier du procédé conforme à l'invention dans lequel R^{A} est différent d'une unité éthylène, d'une unité d'un 1,3-diène, d'un enchaînement d'unités éthylène, d'un enchaînement d'unités d'un 1,3-diène, d'un enchaînement d'unités constituées d'une ou plusieurs unité éthylène et d'une ou plusieurs unités d'un 1,3-diène. Le polymère conforme à l'invention est un polymère multibloc de formule (IV)

B-(A¹-B¹)ₙ-A-R^{A}-A-(B¹-A¹)ₙ-B (IV)

dans laquelle A et A¹ représentent chacun un bloc qui est un copolymère statistique comprenant des unités d'un 1,3-diène et des unités éthylène, B et B¹ représentent chacun un bloc qui est un polyéthylène, n est un entier égal ou supérieur à 0, R^{A} est une chaîne divalente hydrocarbonée aliphatique, interrompue ou non par un ou plusieurs atomes d'oxygène ou de soufre ou bien par un ou plusieurs groupes arylènes et R^{A} est différent d'une unité éthylène, d'une unité d'un 1,3-diène, d'un enchaînement d'unités éthylène, d'un enchaînement d'unités d'un 1,3-diène, d'un enchaînement d'unités constituées d'une ou plusieurs unité éthylène et d'une ou plusieurs unités d'un 1,3-diène.

De préférence, le polymère conforme à l'invention est un élastomère.

Selon un mode de réalisation particulièrement préférentiel de l'invention, le polymère multibloc est un polymère de formule (IV) dans lequel n est égal à 0, auquel cas le polymère est un tribloc, de préférence élastomère.

Selon un autre mode de réalisation de l'invention qui peut être combiné avec les autres modes de réalisation relatifs au polymère conforme à l'invention, le polymère multibloc contient des unités de motif 1,2-cyclohexanediyle.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemple :

**Chromatographie d'exclusion stérique haute température (SEC HT).** Les analyses de Chromatographie d'exclusion stérique à haute température (HT-SEC) ont été réalisées avec un appareil Viscotek (Malvern Instruments) équipé de 3 colonnes (PLgel Olexis 300 mm x 7 mm I. D. de Agitent Technologies) et de 3 détecteurs (réfractomètre et viscosimètre différentiels, et diffusion de la lumière). 200 µL d'une solution de l'échantillon à une concentration de 3 mg mL⁻¹ ont été élués dans le 1,2,4-trichlorobenzène en utilisant un débit de 1 mL min⁻¹ à 150 °C. La phase mobile a été stabilisée par du 2,6-di(tert-butyl)-4-méthylphénol (400 mg L⁻¹). Le logiciel OmniSEC a été utilisé pour l'acquisition et l'analyse des données. Les masses molaires moyennes en nombre (Mn) des copolymères d'éthylène et de butadiène synthétisés sont calculées en utilisant une courbe de calibration universelle étalonnée à partir de polystyrènes standards (Masses molaires au pic *M*ₚ : 672 à 12 000 000 g mol⁻¹) de Polymer Standard Service (Mainz) en utilisant les détecteurs réfractomètre et viscosimètre.

**Résonance magnétique nucléaire (RMN).** La spectroscopie RMN ¹H haute résolution des copolymères a été effectuée sur un spectromètre Bruker 400 Avance III opérant à 400 MHz équipé d'une sonde BBFO 5 mm. Les acquisitions sont faites à 363 K. Un mélange de tétrachloroéthylène (TCE) et benzène deutéré (C₆D₆) (2/1 v/v) a été utilisé comme solvant. Les échantillons ont été analysés à une concentration de 17 g L⁻¹. Les déplacements chimiques sont donnés en ppm, relativement au signal proton du benzène deutéré fixé à 7,16 ppm. Le nombre d'acquisitions est fixé à 512.

**Calorimétrie différentielle à balayage (DSC).** Les analyses sont effectuées sur un appareil DSC 3⁺ (Mettler Toledo) suivant une méthode dynamique comportant 9 paliers de température : Palier 1 : 20 à 180 °C (10 °C min⁻¹), Palier 2 : isotherme 180 °C (5 min), Palier 3 : 180 à -80 °C (-10 °C min⁻¹), Palier 4 : isotherme -80 °C (5 min), Palier 5 : -80 à 180 °C (10 °C min⁻¹), Palier 6 : isotherme 180 °C (5 min), Palier 7 : 180 à -80 °C (10 °C min⁻¹), Palier 8 : isotherme -80 °C (5 min), Palier 9 : -80 à 180 °C (10 °C min⁻¹). Les deux premières montées permettent d'effacer le passé thermique de l'échantillon. Les mesures de la température de transition vitreuse et de fusion se font sur le 9^{ème} palier. Le 7^{ème} palier est également conservé pour obtenir des informations sur la cristallisation de l'échantillon. Le taux de cristallinité est déterminé par rapport à un polyéthylène 100% cristallin (Δ_{f}H = 293 J g⁻¹; B. Wunderlich, Thermal analysis, Academic Press, 1990, 281).

### Préparation du co-catalyseur, le 1,5-di(bromure de magnésium)-pentanediyle (DBMP) :

1,25 g (50 mmol, 10 équivalents) de magnésium sont inertés dans un ballon de 50 mL muni d'une olive aimantée et surmonté d'une ampoule de coulée de 10 mL. Une bille de diiode (10 mg) est introduite sur le magnésium. 11 mL de MeTHF distillé sur sodium/benzophénone sont introduits dans le ballon sous agitation et 9 mL sont introduits dans l'ampoule de coulée. 0,68 mL de 1,5-dibromopentane (5 mmol, 1 équivalent) dégazé et séché sur tamis moléculaire activé sont introduits dans l'ampoule de coulée. La solution d'halogénoalcane est coulée au goutte à goutte sur le magnésium pendant 1 h. L'agitation est maintenue 12 h à 20 °C. Cette solution est concentrée sous vide puis diluée dans 10 mL de toluène. La concentration en groupement pentanediyle est estimée à 0,45 mol L⁻¹.

¹H NMR (C₆D₆ - 400 MHz - 298 K) δ : ppm = 2,06 (quin, J = 7,6 Hz, « b »), 1,80 (quin, J = 7,4 Hz, « c »), -0,05 (t, J = 7,7 Hz, « a ») ; quin pour quintuplet.

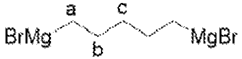

Préparation d'un polymère tribloc conforme à l'invention, avec un bloc central copolymère statistique d'éthylène et de 1,3-butadiène et des blocs terminaux polyéthylène :
200 mL de toluène (Biosolve) purifié sur un système SPS800 MBraun sont introduits dans un ballon inerté de 250 mL équipé d'une olive aimantée. 0,6 mL (0,25 mmol) d'une solution de 1,5-di(bromure de magnésium)pentanediyle (DBMP 0,45 mol L⁻¹) préparé sont introduits dans le ballon sous agitation. 16 mg (25 µmol de néodyme) de {(Me₂Si(C₁₃H₈)₂)Nd(-BH₄)[(-BH₄)Li(THF)]}₂ sont ensuite introduits dans le ballon.

Préparation du bloc central (Etape 1) : La solution catalytique est ensuite transférée à l'aide d'une canule dans un réacteur de 250 mL sous atmosphère inerte à 70 °C. La surpression d'argon dans le réacteur est réduite à 0,5 bar puis le réacteur est pressurisé à 4 bars avec un mélange éthylène / butadiène de ratio 80 / 20 molaire sous une agitation à 1 000 tr min⁻¹. La pression est maintenue constante dans le réacteur à l'aide d'un réservoir contenant le mélange éthylène / butadiène. Après une chute de pression dans le réservoir équivalente à environ 13 g de monomères, l'alimentation est arrêtée et le réacteur est isolé jusqu'à ce que la pression dans le réacteur atteigne 2,8 bars pour obtenir 15 g de copolymère.

Préparation des blocs terminaux (Etape 2) : Le réacteur est de nouveau pressurisé à 4 bars à l'aide d'un réservoir contenant de l'éthylène uniquement, puis 3 g de monomères environ sont consommés par chute de pression dans le réservoir.

Le réacteur est dégazé et la température est ramenée à 20 °C. La solution de polymère est précipitée dans du méthanol sous agitation en présence d'environ 20 mg de 2,2'-Méthylènebis(6-tert-butyl-4-méthylphénol) comme antioxydant. Le polymère obtenu est séché sous vide à 70 °C pendant 4 h. 18,5 g de polymère tribloc sec sont récupérés. Les caractéristiques du polymère tribloc sont les suivantes :
Température de transition vitreuse Tg : -35°C correspondant au bloc copolymère statistique d'éthylène et de 1,3-butadiène ;
Température de fusion Tf : 122°C correspondant aux blocs polyéthylène ;
Taux de cristallinité : 8,9% massique ;
Mn SEC-HT : 62600 g/mol.

Le taux d'unité éthylène, le taux d'unité de 1,3 butadiène sous la configuration 1,2 (unité 1,2), sous la configuration 1,4 (unité 1,4) et le taux d'unité de motif 1,2-cyclohexanediyle exprimés en pourcentage molaire par rapport à l'ensemble des unités monomères du polymère sont respectivement 81,9%, 6,7%, 4,0% et 7,4%.

## Revendications

1. Procédé de préparation d'un polymère multibloc qui comprend la copolymérisation statistique d'un mélange monomère contenant de l'éthylène et un 1,3-diène, puis la polymérisation subséquente d'éthylène en présence d'un système catalytique à base au moins d'un métallocène de formule (la) ou (Ib) et d'un organomagnésien de formule (IIa) ou (Ilb)
{P(Cp¹)(Cp²)Y} (Ia)
Cp³Cp⁴Y (Ib)
Y désignant un groupe comportant un atome d'une terre rare,
Cp¹ et Cp², identiques ou différents, étant choisis dans le groupe constitué par les groupes fluorényles, les groupes cyclopentadiényles et les groupes indényles, les groupes étant substitués ou non substitués,
P étant un groupe pontant les deux groupes Cp¹ et Cp², et comprenant un atome de silicium ou de carbone,
Cp³ et Cp⁴, identiques ou différents, sont choisis dans le groupe constitué par les groupes fluorényles, les groupes cyclopentadiényles et les groupes indényles, les groupes étant substitués ou non substitués,
R^{B}-(Mg-R^{A})ₘ-Mg-R^{B} (IIa)
X-Mg-R^{A}-Mg-X (IIb)
R^{A} étant une chaîne divalente hydrocarbonée aliphatique, interrompue ou non par un ou plusieurs atomes d'oxygène ou de soufre ou bien par un ou plusieurs groupes arylènes,
R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
X étant un atome d'halogène,
m étant un nombre supérieur ou égal à 1, de préférence égal à 1.

2. Procédé selon la revendication 1 dans lequel le symbole Y représente le groupe Met-G, avec Met désignant l'atome de la terre rare et G désigne un atome d'halogène choisi dans le groupe constitué par le chlore, le fluor, le brome et l'iode ou un groupe comprenant le motif borohydrure BH₄, de préférence G désigne un atome de chlore ou le groupe de formule (III)
(BH₄)_{(1+y)-}L_{y}-Nₓ (III)
dans laquelle
L représente un métal alcalin choisi dans le groupe constitué par le lithium, le sodium et le potassium,
N représente une molécule d'un éther, de préférence diéthyléther ou tétrahydrofurane, x, nombre entier ou non, est égal ou supérieur à 0,
y, nombre entier, est égal ou supérieur à 0.

3. Procédé selon la revendication 1 ou 2 dans lequel la terre rare est un lanthanide dont le numéro atomique varie de 57 à 71, de préférence le néodyme.

4. Procédé selon l'une quelconque des revendications 1 à 3 dans lequel le pont P répond à la formule ZR¹R², Z représentant un atome de silicium ou de carbone, R¹ et identiques ou différents, représentant chacun un groupe alkyle comprenant de 1 à 20 atomes de carbone, de préférence un méthyle.

5. Procédé selon l'une quelconque des revendications 1 à 4 dans lequel le métallocène est de formule (III-1), (!!!-2), (!!!-3), (!!!-4) ou (!!!-5) :
[Me₂Si(Flu)₂Nd(µ-BH₄)₂Li(THF)] (III-1)
[{Me₂SiFlu₂Nd(µ-BH₄)₂Li(THF)}₂] (III-2)
[Me₂SiFlu₂Nd(µ-BH₄)(THF)] (III-3)
[{Me₂SiFlu₂Nd(µ-BH₄)(THF)}₂] (III-4)
[Me₂SiFlu₂Nd(µ-BH₄)] (!!!-5)
Flu représentant le groupe C₁₃H₈.

6. Procédé selon l'une quelconque des revendications 1 à 5 dans lequel si l'un des 2 atomes de carbone du noyau benzénique de R^{B} en ortho du magnésium est substitué par un isopropyle, le deuxième atome de carbone du noyau benzénique de R^{B} en ortho du magnésium n'est pas substitué par un isopropyle.

7. Procédé selon l'une quelconque des revendications 1 à 6 dans lequel les atomes de carbone du noyau benzénique de R^{B} en ortho du magnésium sont substitués par un méthyle ou un éthyle, de préférence un méthyle.

8. Procédé selon l'une quelconque des revendications 1 à 7 dans lequel l'organomagnésien de formule (IIa) est de formule (IIa-m) 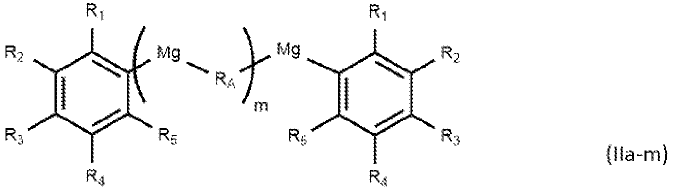
R₁ et R₅, identiques ou différents, représentant un méthyle ou un éthyle, de préférence un méthyle,
R₂, R₃ et R₄, identiques ou différents, étant un atome d'hydrogène ou alkyle,
R^{A} étant une chaîne divalente hydrocarbonée aliphatique, interrompue ou non par un ou plusieurs atomes d'oxygène ou de soufre ou bien par un ou plusieurs groupes arylènes,
m étant un nombre supérieur ou égal à 1, de préférence égal à 1.

9. Procédé selon l'une quelconque des revendications 1 à 8 dans lequel R^{A} est un alcanediyle, ramifiée ou linéaire, un cycloalcanediyle ou un radical xylènediyle, de préférence un alcanediyle.

10. Procédé selon l'une quelconque des revendications 1 à 9 dans lequel R^{A} contient 3 à 10 atomes de carbone, préférentiellement 3 à 8 atomes de carbone.

11. Procédé selon l'une quelconque des revendications 1 à 10 dans lequel X est un atome de brome ou de chlore, de préférence un atome de brome.

12. Procédé selon l'une quelconque des revendications 1 à 11 dans lequel le 1,3-diène est le 1,3-butadiène, l'isoprène ou un mélange de 1,3-diènes dont un est le 1,3-butadiène, de préférence le 1,3-butadiène.

13. Procédé selon l'une quelconque des revendications 1 à 12 dans lequel le mélange monomère contenant de l'éthylène et un 1,3-diène est un mélange d'éthylène et d'un 1,3-diène qui contient avantageusement plus de 50% en mole d'éthylène.

14. Procédé selon l'une quelconque des revendications 1 à 13 dans lequel le polymère bloc est un polymère tribloc de formule B-A-B dans laquelle A dit bloc central est un copolymère statistique comprenant des unités du 1,3-diène et des unités éthylène, et B dit bloc terminal est un polyéthylène.

15. Polymère multibloc de formule (IV)
B-(A¹-B¹)ₙ-A-R^{A}-A-(B¹-A¹)ₙ-B (IV)
dans laquelle A et A¹ représentent chacun un bloc qui est un copolymère statistique comprenant des unités d'un 1,3-diène et des unités éthylène, B et B¹ représentent chacun un bloc qui est un polyéthylène, n est un entier égal ou supérieur à 0, R^{A} est une chaîne divalente hydrocarbonée aliphatique, interrompue ou non par un ou plusieurs atomes d'oxygène ou de soufre ou bien par un ou plusieurs groupes arylènes et R^{A} est différent d'une unité éthylène, d'une unité d'un 1,3-diène, d'un enchaînement d'unités éthylène, d'un enchaînement d'unités d'un 1,3-diène, d'un enchaînement d'unités constituées d'une ou plusieurs unité éthylène et d'une ou plusieurs unités d'un 1,3-diène.

## Patentansprüche

1. Verfahren zur Herstellung eines Multiblockpolymers, das die statistische Copolymerisation einer Monomerenmischung, die Ethylen und ein 1,3-Dien enthält, und dann die anschließende Polymerisation von Ethylen in Gegenwart eines katalytischen Systems auf Basis von mindestens einem Metallocen der Formel (Ia) oder (Ib) und einer Organomagnesiumverbindung der Formel (IIa) oder (IIb) umfasst,
{P(Cp¹)(Cp²)Y} (Ia)
Cp³Cp⁴Y (Ib)
wobei Y für eine Gruppe steht, die ein Seltenerdmetallatom umfasst,
Cp¹ und Cp² gleich oder verschieden sind und aus der Gruppe bestehend aus Fluorenylgruppen, Cyclopentadienylgruppen und Indenylgruppen ausgewählt sind, wobei die Gruppen substituiert oder unsubstituiert sind,
wobei P für eine Gruppe steht, die die beiden Gruppen Cp¹ und Cp² verbrückt und ein Silicium- oder Kohlenstoffatom umfasst,
Cp³ und Cp⁴ gleich oder verschieden sind und aus der Gruppe bestehend aus Fluorenylgruppen, Cyclopentadienylgruppen und Indenylgruppen ausgewählt sind, wobei die Gruppen substituiert oder unsubstituiert sind,
R^{B}-(Mg-R^{A})ₘ-Mg-R^{B} (IIa)
X-Mg-R^{A}-Mg-X (IIb)
wobei R^{A} für eine zweiwertige aliphatische Kohlenwasserstoffkette, die gegebenenfalls durch ein oder mehrere Sauerstoff- oder Schwefelatome oder auch durch ein oder mehrere Arylengruppen unterbrochen ist, steht, R^{b} einen durch das Magnesiumatom substituierten Benzolkern umfasst, wobei eines der Kohlenstoffatomen des Benzolkerns in ortho-Position zu dem Magnesium durch ein Methyl, ein Ethyl oder ein Isopropyl substituiert ist oder mit dem Kohlenstoffatom, das sein nächster Nachbar ist und das in meta-Position zu dem Magnesium steht, einen Ring bildet, wobei das andere Kohlenstoffatom des Benzolkerns in ortho-Position zu dem Magnesium durch ein Methyl, ein Ethyl oder ein Isopropyl substituiert ist,
wobei X für ein Halogenatom steht,
wobei m für eine Zahl größer oder gleich 1 und vorzugsweise gleich 1 steht.

2. Verfahren nach Anspruch 1, wobei das Symbol Y für die Gruppe Met-G steht, wobei Met für das Seltenerdmetallatom steht und G für ein Halogenatom, das aus der Gruppe bestehend aus Chlor, Fluor, Brom und Iod ausgewählt ist, oder eine Gruppe, die die Borhydrid-Einheit BH₄ umfasst, steht, wobei G vorzugsweise für ein Chloratom oder die Gruppe der Formel (III) steht:
(BH₄)_{(1+y)}-L_{y}-Nₓ (III)
in der
L für ein Alkalimetall, das aus der Gruppe bestehend aus Lithium, Natrium und Kalium ausgewählt ist, steht,
N für ein Molekül eines Ethers, vorzugsweise Diethylether oder Tetrahydrofuran, steht,
x ganzzahlig oder nicht ganzzahlig ist und gleich oder größer als 0 ist,
y ganzzahlig ist und gleich oder größer als 0 ist.

3. Verfahren nach Anspruch 1 oder 2, wobei es sich bei dem Seltenerdmetall um ein Lanthanid mit einer Ordnungszahl von 57 bis 71, vorzugsweise Neodym, handelt.

4. Verfahren nach einem der Ansprüche 1 bis 3, wobei die Brücke P der Formel ZR¹R² entspricht, wobei Z für ein Silicium- oder Kohlenstoffatom steht und R¹ und R² gleich oder verschieden sind und jeweils für eine Alkylgruppe mit 1 bis 20 Kohlenstoffatomen, vorzugsweise ein Methyl, stehen.

5. Verfahren nach einem der Ansprüche 1 bis 4, wobei das Metallocen der Formel (III-1), (III-2), (III-3), (III-4) oder (III-5) entspricht:
[Me₂Si(Flu)₂Nd(µ-BH₄)₂Li(THF)] (III-1)
[{Me₂SiFlu₂Nd(µ-BH₄)₂Li(THF)}₂] (III-2)
[Me₂SiFlu₂Nd(µ-BH₄)(THF)] (III-3)
[{Me₂SiFlu₂Nd(µ-BH₄)(THF)}₂] (III-4)
[Me₂SiFlu₂Nd(µ-BH₄)] (III-5)
wobei Flu für die Gruppe C₁₃H₈ steht.

6. Verfahren nach einem der Ansprüche 1 bis 5, wobei dann, wenn eines der 2 Kohlenstoffatome des Benzolkerns von R^{B} in ortho-Position zu dem Magnesium durch ein Isopropyl substituiert ist, das zweite Kohlenstoffatom des Benzolkerns von R^{B} in ortho-Position zu dem Magnesium nicht durch ein Isopropyl substituiert ist.

7. Verfahren nach einem der Ansprüche 1 bis 6, wobei die Kohlenstoffatome des Benzolkerns von R^{B} in ortho-Position zu dem Magnesium durch ein Methyl oder ein Ethyl, vorzugsweise ein Methyl, substituiert sind.

8. Verfahren nach einem der Ansprüche 1 bis 7, wobei die Organomagnesiumverbindung der Formel (IIa) die Formel (IIa-m) aufweist: 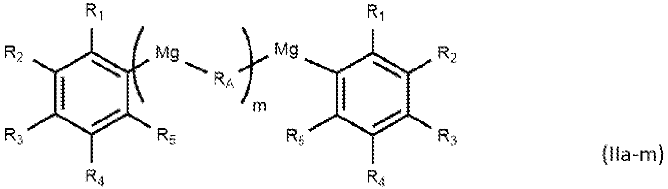
wobei R₁ und R₅ gleich oder verschieden sind und für ein Methyl oder ein Ethyl, vorzugsweise ein Methyl, stehen, wobei R₂, R₃ und R₄ gleich oder verschieden sind und für ein Wasserstoffatom oder Alkyl stehen,
wobei R^{A} für eine zweiwertige aliphatische Kohlenwasserstoffkette, die gegebenenfalls durch ein oder mehrere Sauerstoff- oder Schwefelatome oder auch durch eine oder mehrere Arylengruppen unterbrochen ist, steht, wobei m für eine Zahl größer oder gleich 1 und vorzugsweise gleich 1 steht.

9. Verfahren nach einem der Ansprüche 1 bis 8, wobei R^{A} für ein verzweigtes oder lineares Alkandiyl, ein Cycloalkandiyl oder einen Xyloldiylrest, vorzugsweise ein Alkandiyl, steht.

10. Verfahren nach einem der Ansprüche 1 bis 9, wobei R^{A} 3 bis 10 Kohlenstoffatome und bevorzugt 3 bis 8 Kohlenstoffatome enthält.

11. Verfahren nach einem der Ansprüche 1 bis 10, wobei X für ein Brom- oder Chloratom, vorzugsweise ein Bromatom, steht.

12. Verfahren nach einem der Ansprüche 1 bis 11, wobei es sich bei dem 1,3-Dien um 1,3-Butadien, Isopren oder eine Mischung von 1,3-Dienen, von denen eines 1,3-Butadien ist, vorzugsweise 1,3-Butadien, handelt.

13. Verfahren nach einem der Ansprüche 1 bis 12, wobei es sich bei der Monomerenmischung, die Ethylen und ein 1,3-Dien enthält, um eine Mischung von Ethylen und einem 1,3-Dien handelt, die vorteilhafterweise mehr als 50 Mol-% Ethylen enthält.

14. Verfahren nach einem der Ansprüche 1 bis 13, wobei es sich bei dem Blockpolymer um ein Triblockpolymer der Formel B-A-B handelt, wobei es sich bei A, das als zentraler Block bezeichnet wird, um ein statistisches Copolymer, das 1,3-Dieneinheiten und Ethyleneinheiten umfasst, handelt und es sich bei B, das als endständiger Block bezeichnet wird, um ein Polyethylen handelt.

15. Multiblockpolymer der Formel (IV)
B-(A¹-B¹)ₙ-A-R^{A}-A-(B¹-A¹)ₙ-B (IV)
in der A und A¹ jeweils für einen Block stehen, bei dem es sich um ein statistisches Copolymer, das Einheiten eines 1,3-Diens und Ethyleneinheiten umfasst, handelt, B und B¹ jeweils für einen Block stehen, bei dem es sich um ein Polyethylen handelt, n für eine ganze Zahl gleich oder größer als 0 steht, R^{A} für eine zweiwertige aliphatische Kohlenwasserstoffkette, die gegebenenfalls durch ein oder mehrere Sauerstoff- oder Schwefelatome oder auch durch ein oder mehrere Arylengruppen unterbrochen ist, steht und R^{A} von einer Ethyleneinheit, einer Einheit eines 1,3-Diens, einer Kette von Ethyleneinheiten, einer Kette von Einheiten eines 1,3-Diens, einer Kette von Einheiten, die aus einer oder mehreren Ethyleneinheiten und einer oder mehreren Einheiten eines 1,3-Diens besteht, verschieden ist.

## Claims

1. Process for preparing a multiblock polymer, which comprises the statistical copolymerization of a monomer mixture containing ethylene and a 1,3-diene, followed by the subsequent polymerization of ethylene in the presence of a catalytic system based on at least one metallocene of formula (Ia) or (Ib) and an organomagnesium reagent of formula (Ila) or (IIb)
{P(Cp¹)(Cp²)Y} (Ia)
Cp³Cp⁴Y (Ib)
Y denoting a group including a rare-earth metal atom,
Cp¹ and Cp², which are identical or different, being chosen from the group consisting of fluorenyl groups, cyclopentadienyl groups and indenyl groups, the groups being substituted or unsubstituted,
P being a group bridging the two groups Cp¹ and Cp² and comprising a silicon or carbon atom,
Cp³ and Cp⁴, which are identical or different, are chosen from the group consisting of fluorenyl groups, cyclopentadienyl groups and indenyl groups, the groups being substituted or unsubstituted,
R^{B}-(Mg-R^{A})ₘ-Mg-R^{B} (IIa)
X-Mg-R^{A}-Mg-X (IIb)
R^{A} being a divalent aliphatic hydrocarbon-based chain, interrupted or not with one or more oxygen or sulfur atoms or with one or more arylene groups,
R^{B} comprising a benzene nucleus substituted with the magnesium atom, one of the carbon atoms of the benzene nucleus ortho to the magnesium being substituted with a methyl, an ethyl, an isopropyl or forming a ring with the carbon atom which is its closest neighbour and which is meta to the magnesium, the other carbon atom of the benzene nucleus ortho to the magnesium being substituted with a methyl, an ethyl or an isopropyl,
X being a halogen atom,
m being a number greater than or equal to 1 and preferably equal to 1.

2. Process according to Claim 1, in which the symbol Y represents the group Met-G, with Met denoting the rare-earth metal atom and G denotes a halogen atom chosen from the group consisting of chlorine, fluorine, bromine and iodine or a group comprising the borohydride unit BH₄; preferably, G denotes a chlorine atom or the group of formula (III)
(BH₄)_{(1+y)-}L_{y}-Nₓ (III)
in which
L represents an alkali metal chosen from the group consisting of lithium, sodium and potassium,
N represents a molecule of an ether, preferably diethyl ether or tetrahydrofuran,
x, which may or may not be an integer, is greater than or equal to 0,
y, which is an integer, is greater than or equal to 0.

3. Process according to Claim 1 or 2, in which the rare-earth metal is a lanthanide, the atomic number of which ranges from 57 to 71, preferably neodymium.

4. Process according to any one of Claims 1 to 3, in which the bridge P corresponds to the formula ZR¹R², Z representing a silicon or carbon atom and R¹ and which may be identical or different, each representing an alkyl group comprising from 1 to 20 carbon atoms, preferably a methyl.

5. Process according to any one of Claims 1 to 4, in which the metallocene is of formula (III-1), (III-2), (!!!-3), (!!!-4) or (III-5):
[Me₂Si(Flu)₂Nd(µ-BH₄)₂Li(THF)] (III-1)
[{Me₂SiFlu₂Nd(µ-BH₄)₂Li(THF)}₂] (!!!-2)
[Me₂SiFlu₂Nd(µ-BH₄)(THF)] (III-3)
[{Me₂SiFlu₂Nd(µ-BH₄)(THF)}₂] (!!!-4)
[Me₂SiFlu₂Nd(µ-BH₄)] (!!!-5)
Flu representing the C₁₃H₈ group.

6. Process according to any one of Claims 1 to 5, in which, if one of the two carbon atoms of the benzene nucleus of R^{B} ortho to the magnesium is substituted with an isopropyl, the second carbon atom of the benzene nucleus of R^{B} ortho to the magnesium is not substituted with an isopropyl.

7. Process according to any one of Claims 1 to 6, in which the carbon atoms of the benzene nucleus of R^{B} ortho to the magnesium are substituted with a methyl or an ethyl, preferably a methyl.

8. Process according to any one of Claims 1 to 7, in which the organomagnesium reagent of formula (Ila) is of formula (Ila-m), 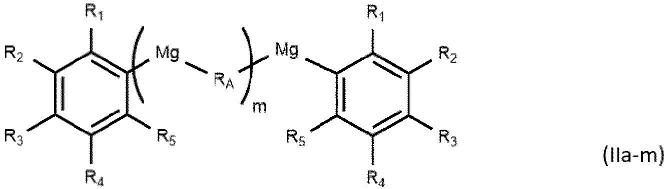
R₁ and R₅, which are identical or different, represent a methyl or an ethyl, preferably a methyl,
R₂, R₃ and R₄, which are identical or different, being a hydrogen atom or an alkyl,
R^{A} being a divalent aliphatic hydrocarbon-based chain, interrupted or not with one or more oxygen or sulfur atoms or with one or more arylene groups,
m being a number greater than or equal to 1 and preferably equal to 1.

9. Process according to any one of Claims 1 to 8, in which R^{A} is a branched or linear alkanediyl, cycloalkanediyl or xylenediyl radical, preferably an alkanediyl.

10. Process according to any one of Claims 1 to 9, in which R^{A} contains 3 to 10 carbon atoms, preferentially 3 to 8 carbon atoms.

11. Process according to any one of Claims 1 to 10, in which X is a bromine or chlorine atom, preferably a bromine atom.

12. Process according to any one of Claims 1 to 11, in which the 1,3-diene is 1,3-butadiene, isoprene or a mixture of 1,3-dienes one of which is 1,3-butadiene, preferably 1,3-butadiene.

13. Process according to any one of Claims 1 to 12, in which the monomer mixture containing ethylene and a 1,3-diene is a mixture of ethylene and a 1,3-diene which advantageously contains more than 50 mol% of ethylene.

14. Process according to any one of Claims 1 to 13, in which the block polymer is a triblock polymer of formula B-A-B in which A, referred to as the central block, is a statistical copolymer comprising 1,3-diene units and ethylene units, and B, referred to as the terminal block, is a polyethylene.

15. Multiblock polymer of formula (IV)
B-(A¹-B¹)ₙ-A-R^{A}-A-(B¹-A¹)ₙ-B (IV)
in which A and A¹ each represent a block which is a statistical copolymer comprising units of a 1,3-diene and ethylene units, B and B¹ each represent a block which is polyethylene, n is an integer greater than or equal to 0, R^{A} is an aliphatic hydrocarbon-based divalent chain, interrupted or not with one or more oxygen or sulfur atoms or one or more arylene groups, and R^{A} is other than an ethylene unit, a 1,3-diene unit, a chain of ethylene units, a chain of 1,3-diene units, a chain of units consisting of one or more ethylene units and one or more 1,3-diene units.
